# DEMANDE DE BREVET EUROPEEN

(11) **EP 2 423 852 A2**
(43) Date de publication de la demande: **29.02.2012**
(21) Numéro de dépôt: 11306081.8
(22) Date de dépôt: 29.08.2011
(51) Int. Cl.: G06K 9/62

(54) **Procede multimodal d'identification biometrique, systeme et dispositif permettant sa mise en oeuvre.**

(30) Priorité: 30.08.2010 FR 1056860
(71) Demandeur: Etic Europe Ecole des Technologies d'Informatique Et de Communication, 67203 Oberschaeffolsheim (FR)
(72) Inventeur: Dias Antunes, Mario Carlos, F-67203 OBERSCHAEFFOLSHEIM (FR)
(74) Mandataire: Rhein, Alain

(57) **Abrégé**

Procédé multimodal d'identification biométrique comprenant une phase d'enrôlement et une phase d'identification.

La phase d'enrôlement comprend successivement:
- l'extraction des caractéristiques d'un premier critère biométrique, et la détermination d'un premier gabarit de référence,
- l'extraction des caractéristiques d'au moins un second critère biométrique, et la détermination d'au moins un second gabarit de référence,
- le traitement informatique des gabarits de référence, et l'obtention d'un gabarit de référence multimodal unique,
tandis que la phase d'identification comprend :
- l'extraction des caractéristiques du premier critère biométrique, et la détermination du premier gabarit d'identification,
- l'extraction des caractéristiques d'au moins un second critère biométrique, et la détermination d'au moins un second gabarit d'identification,
- le traitement informatique des gabarits d'identification obtenus, et l'obtention d'un gabarit d'identification multimodal unique.
Puis on compare le gabarit d'identification multimodal au gabarit de référence multimodal, en sorte d'obtenir un score de comparaison multimodal, que l'on compare à une valeur seuil fixée préalablement.

## Description

La présente invention a pour objet un procédé multimodal d'identification biométrique, un système permettant sa mise en oeuvre, ainsi qu'un dispositif de capture de critères biométriques utilisé dans ledit système.

L'identification biométrique trouve des applications dans de nombreux domaines, essentiellement liés à la sécurité, afin d'autoriser un accès à des bâtiments, à des services ou à des fichiers par exemple. L'identification biométrique permet de remplacer avantageusement les systèmes à mot de passe ou à cartes qui peuvent être contournés et falsifiés.

L'identification biométrique consiste à permettre d'identifier un individu à partir de caractéristiques physiques uniques.

De manière connue l'identification par la biométrie suit un processus générique clairement défini qui s'effectue en deux temps : une phase dite d'enrôlement, puis une phase de reconnaissance (identification ou authentification).

La phase d'enrôlement consiste à relever les données biométriques correspondant aux caractéristiques physiques de l'individu, et devant être connues par le système. On obtient ainsi un gabarit de référence, lequel est stocké soit de manière centralisée, soit sur un support physique en possession dudit individu, une carte ou un badge par exemple.

La phase de reconnaissance consiste à relever le gabarit d'identification de l'individu qu'il faut identifier ou authentifier, puis à le comparer soit à ceux stockés de manière centralisée pour une identification, soit à celui stocké sur le support physique présenté par l'individu pour une authentification.

On notera que la présente invention concerne plus particulièrement le domaine de l'identification de personnes, ce qui induit la nécessité de stocker de manière centralisée des données relatives aux gabarits recueillis lors de la phase d'enrôlement, et accessibles depuis tous les points d'accès lors de la phase de reconnaissance.

On notera toutefois que la présente invention peut également trouver une application dans le domaine de l'authentification.

On utilise actuellement plusieurs modalités biométriques, lesquelles sont plus ou moins retenues selon essentiellement des critères de précision et de coût de mise en oeuvre. Les plus communes sont les empreintes digitales, l'iris et la voix.

L'exécution des deux phases d'enrôlement et de reconnaissance dans un système biométrique repose sur le cinq composants suivants :
- un capteur, utilisé pour relever une caractéristique biométrique,
- un algorithme d'extraction des éléments caractéristiques de l'individu pour constituer son d'identification,
- un moyen de stockage des gabarits de référence,
- un algorithme de comparaison, qui va comparer ledit gabarit d'identification aux gabarits de référence, et en déduire un score,
- une procédure de décision, pour déterminer selon le score obtenu si la personne est autorisée ou non.

Lors de la procédure de décision, le score obtenu est comparé à un seuil fixé préalablement. Le seuil est donc fixé en fonction du niveau de sécurité souhaité.

Un tel système présente toutefois une faille, notamment lorsqu'il y a des difficultés à examiner le critère biométrique et à déterminer le gabarit d'identification. En effet dans le cas de comparaison d'une empreinte digitale, le gabarit d'identification d'un doigt présentant une coupure peut être rejeté, de même pour une voix enrouée dans le cas d'une reconnaissance vocale.

Pour éviter ces inconvénients, afin d'éviter le rejet d'un individu alors qu'il est parfaitement autorisé, on abaisse les seuils de comparaison, au détriment de la sécurité.

Pour tenter de pallier cet inconvénient, il a été proposé des systèmes d'identification et/ou d'authentification biométrique multimodale, utilisant pour chaque individu examiné, au moins deux critères biométriques, c'est-à-dire réaliser la comparaison d'au moins deux gabarits, en sorte que l'autorisation soit donnée dès lors qu'un score est supérieur au seuil correspondant. Ces systèmes ne sont toutefois pas toujours fiables, puisqu'il demeure possible que tous les critères biométriques examinés soient temporairement défaillants.

La présente invention a pour but de remédier aux divers inconvénients précités en proposant un procédé multimodal d'identification biométrique, un système permettant sa mise en oeuvre, ainsi qu'un dispositif de capture de critères biométriques utilisé dans ledit système.

Le procédé multimodal d'identification biométrique selon l'invention, comprenant une phase d'enrôlement et une phase d'identification, où chacune de ces phases comprend une opération de capture d'au moins deux critères biométriques, et une opération de comparaison, et il se caractérise essentiellement en ce que ladite phase d'enrôlement comprend les opérations successives suivantes:
- extraction des caractéristiques du premier critère biométrique, et détermination du premier gabarit de référence,
- extraction des caractéristiques d'au moins un second critère biométrique, et détermination d'au moins un second gabarit de référence,
- traitement informatique des gabarits de référence obtenus, et obtention d'un gabarit de référence multimodal unique issu desdits gabarits de référence, tandis que la phase d'identification comprend les opérations suivantes :
   - extraction des caractéristiques du premier critère biométrique, et détermination du premier gabarit d'identification,
   - extraction des caractéristiques d'au moins un second critère biométrique, et détermination d'au moins un second gabarit d'identification,
   - traitement informatique des gabarits d'identification obtenus, et obtention d'un gabarit d'identification multimodal unique issu desdits gabarits d'identification,
   et en ce que l'on compare le gabarit d'identification multimodal au gabarit de référence multimodal, en sorte d'obtenir un score de comparaison multimodal, que l'on compare à une valeur seuil fixée préalablement.

On comprendra qu'étant donné que le gabarit d'identification multimodal tient compte de tous les gabarits identifiés, qu'il est possible d'abaisser le seuil de comparaison du score de comparaison multimodal, sans pour autant que cela se fasse au détriment de la sécurité. Il est ainsi possible que les scores de comparaison de chacun des gabarits identifiés soient inférieurs à leurs seuils respectifs, mais que par contre le score de comparaison multimodal soit supérieur à son seuil de comparaison.

Selon une caractéristique additionnelle du procédé selon l'invention, la comparaison du gabarit d'identification multimodal au gabarit de référence multimodal est réalisée en comparant séparément le premier gabarit d'identification au premier gabarit de référence en sorte d'obtenir un premier score, puis en comparant le au moins second gabarit d'identification au au moins second gabarit de référence en sorte d'obtenir un au moins second score, enfin à traiter les différents scores obtenus pour créer le score de comparaison multimodal.

Selon une autre caractéristique additionnelle du procédé selon l'invention, on réalise le traitement informatique des gabarits de référence et d'identification en vue d'obtenir des gabarits de référence et d'identification, sur le lieu de stockage du gabarit d'identification multimodal.

Selon une caractéristique additionnelle du procédé selon l'invention, on réalise la comparaison du gabarit d'identification multimodal au gabarit de référence multimodal, en un lieu distant de celui où sont réalisées les opérations de capture.

Selon une autre caractéristique additionnelle du procédé selon l'invention, on capture trois critères biométriques.

La présente invention a également pour objet un système pour la mise en oeuvre du procédé multimodal d'identification biométrique selon l'invention, lequel système se caractérise en ce qu'il comprend :
- des moyens de capture d'au moins deux critères biométriques,
- des moyens informatiques comprenant d'une part un programme permettant de déterminer les gabarits résultant desdits critères biométriques, et d'autre part un programme de traitement desdits gabarits en sorte de déterminer un gabarit multimodal,
- des moyens de stockage des critères biométriques de références,
- des moyens informatiques comprenant un programme permettant de comparer un gabarit multimodal d'identification aux gabarits multimodaux de référence stockés et d'en déduire un score multimodal, de comparer ledit score multimodal à un seuil prédéterminé, et de délivrer ou non une autorisation.

Selon une caractéristique additionnelle du système selon l'invention, les critères biométriques de référence sont stockés sous la forme de gabarits biométriques.

La présente invention a également pour objet un dispositif de capture de critères biométriques utilisé dans ledit système pour mettre en oeuvre le procédé selon l'invention, lequel dispositif se caractérise en ce qu'il se présente sous la forme d'un boîtier muni de moyen de connexion à un moyen informatique de type ordinateur, et qui comporte des moyens de capture d'au moins deux, de préférence trois, critères biométriques.

Selon une caractéristique additionnelle du dispositif selon l'invention, il comporte un moyen d'acquisition d'image d'une empreinte digitale, un moyen d'acquisition d'une image de l'oeil et un moyen d'acquisition d'un signal vocal.

Les avantages et les caractéristiques du procédé selon l'invention, ressortiront plus clairement de la description qui suit et qui se rapporte au dessin annexé, lequel en représente un mode de réalisation non limitatif.

Dans le dessin annexé :
- la figure 1 représente un schéma illustrant le procédé d'identification biométrique selon l'invention.
- la figure 2 représente une vue schématique partielle en perspective du système de mise en oeuvre du procédé selon l'invention.

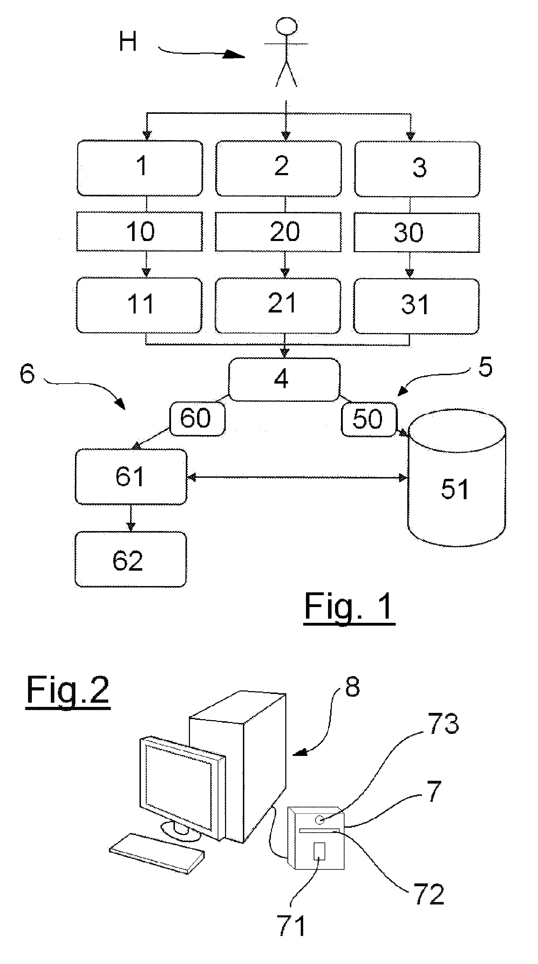

En référence à la figure 1, on peut voir les différentes étapes de mise en oeuvre du procédé d'identification biométrique selon l'invention.

Dans ce procédé, trois critères biométriques sont recherchés sur un individu H à enrôler ou à identifier, à savoir, non limitativement, une empreinte digitale, l'iris et la voix.

Ainsi, dans une première étape du procédé selon l'invention, on recueille sur l'individu H, dans des opérations successives ou simultanées, une image 1 d'une empreinte digitale, une photographie 2 de son iris, et un enregistrement 3 de sa voix.

L'étape suivante consiste à traiter l'image 1, la photographie 2 et l'enregistrement 3, au travers de programmes informatiques, respectivement 10, 20 et 30, de manière à extraire les gabarits d'empreinte digitale 11, d'iris 21 et de voix 31.

Ensuite, au travers d'un programme informatique 4, les trois gabarits 11, 21 et 31 génèrent un gabarit multimodal qui, dans le cas d'une phase d'enrôlement 5, consiste en un gabarit multimodal de référence 50 stocké dans une base centralisée 51, et dans le cas d'une phase d'identification 6, consiste en un gabarit multimodal d'identification 60.

On notera que de manière avantageuse, les données biométriques sont stockées sous la forme de gabarits biométriques, et non sous leur forme brute relevée par le capteur, à savoir image ou signal par exemple.

Dans le cas d'une identification, le gabarit multimodal d'identification 60 est comparé, au travers d'un programme de comparaison 61, à chacun des gabarits multimodaux de référence 50 stockés dans base centralisée 51, puis le score obtenu est comparé au seuil préétabli, de manière qu'une décision 62, d'autorisation ou non, soit prise.

En référence maintenant à la figure 2, on peut voir une partie du matériel nécessaire à la mise ne oeuvre du procédé selon l'invention.

Ce matériel comprend un boîtier 7, destiné à être connecté à un ordinateur 8. Ce boîtier 7 comporte un dispositif 71 d'acquisition d'une image d'une empreinte digitale, un dispositif 72 de reconnaissance vocale, et un dispositif 73 de photographie d'un oeil.

Le boîtier 7 transmet à l'ordinateur 8 les signaux captés par les dispositifs 71, 72 et 73, où ils sont traités par les programmes informatiques, respectivement 10, 20 et 30, qu'il contient, pour éditer les trois gabarits 11, 21 et 31.

L'ordinateur 8 peut comporter le programme d'établissement du gabarit multimodal de référence 50, sachant que ce programme peut également être déporté au niveau de la base centralisée 51.

De la même manière, l'opération de comparaison est de préférence réalisée à distance, au niveau de la base centralisée 51, ou bien en un autre lieu.

## Revendications

1. Procédé multimodal d'identification biométrique comprenant une phase d'enrôlement et une phase d'identification, où chacune de ces phases comprend une opération de capture d'au moins deux critères biométriques, et une opération de comparaison, **caractérisé en ce que** ladite phase d'enrôlement comprend les opérations successives suivantes:
- extraction des caractéristiques du premier critère biométrique, et détermination du premier gabarit de référence,
- extraction des caractéristiques d'au moins un second critère biométrique, et détermination d'au moins un second gabarit de référence,
- traitement informatique des gabarits de référence obtenus, et obtention d'un gabarit de référence multimodal unique issu desdits gabarits de référence, tandis que la phase d'identification comprend les opérations suivantes :
- extraction des caractéristiques du premier critère biométrique, et détermination du premier gabarit d'identification,
- extraction des caractéristiques d'au moins un second critère biométrique, et détermination d'au moins un second gabarit d'identification,
- traitement informatique des gabarits d'identification obtenus, et obtention d'un gabarit d'identification multimodal unique issu desdits gabarits d'identification,
et **en ce que** l'on compare le gabarit d'identification multimodal au gabarit de référence multimodal, en sorte d'obtenir un score de comparaison multimodal, que l'on compare à une valeur seuil fixée préalablement.

2. Procédé selon la revendication 1, **caractérisé en ce que** la comparaison du gabarit d'identification multimodal au gabarit de référence multimodal est réalisée en comparant séparément le premier gabarit d'identification au premier gabarit de référence en sorte d'obtenir un premier score, puis en comparant le au moins second gabarit d'identification au au moins second gabarit de référence en sorte d'obtenir un au moins second score, enfin à traiter les différents scores obtenus pour créer le score de comparaison multimodal.

3. Procédé selon la revendication 1 ou la revendication 2, **caractérisé en ce que** l'on réalise le traitement informatique des gabarits de référence et d'identification en vue d'obtenir des gabarits de référence et d'identification, sur le lieu de stockage du gabarit d'identification multimodal.

4. Procédé selon l'une quelconque des revendications précédentes, **caractérisé en ce que** l'on réalise la comparaison du gabarit d'identification multimodal au gabarit de référence multimodal, en un lieu distant de celui où sont réalisées les opérations de capture.

5. Procédé selon l'une quelconque des revendications précédentes, **caractérisé en ce que** l'on capture trois critères biométriques.

6. Système pour la mise en oeuvre du procédé multimodal d'identification biométrique selon l'une quelconque des revendications précédentes, **caractérisé en ce qu'**il comprend :
- des moyens (71, 72, 73) de capture d'au moins deux critères biométriques (1, 2, 3),
- des moyens informatiques comprenant d'une part un programme (10, 20, 30) permettant de déterminer les gabarits (11, 21, 31) résultant desdits critères biométriques, et d'autre part un programme (4) de traitement desdits gabarits (11, 21, 31) en sorte de déterminer un gabarit multimodal (50, 60),
- des moyens (51) de stockage des critères biométriques de références,
- des moyens informatiques comprenant un programme (61) permettant de comparer un gabarit multimodal d'identification (60) aux gabarits multimodaux de référence (11, 21, 31) stockés et d'en déduire un score multimodal, de comparer ledit score multimodal à un seuil prédéterminé, et de délivrer ou non une autorisation (62).

7. Système selon la revendication 6, **caractérisé en ce que** les critères biométriques de référence sont stockés sous la forme de gabarits biométriques (11, 21, 31).

8. Dispositif de capture de critères biométriques utilisé dans ledit système selon la revendication 6 ou la revendication 7, **caractérisé en ce qu'**il se présente sous la forme d'un boîtier (7) muni de moyen de connexion à un moyen informatique de type ordinateur (8), et qui comporte des moyens (71, 72, 73) de capture d'au moins deux, de préférence trois, critères biométriques.

9. Dispositif selon la revendication 8, **caractérisé en ce qu'**il comporte un moyen d'acquisition d'image d'une empreinte digitale (71), un moyen d'acquisition d'une image de l'oeil (73) et un moyen d'acquisition d'un signal vocal (72).
